(19) Europäisches Patentamt
European Patent Office
Office européen des brevets

(11) **EP 4 425 392 A1**

(12) **EUROPEAN PATENT APPLICATION**
published in accordance with Art. 153(4) EPC

(43) Date of publication:
**04.09.2024 Bulletin 2024/36**

(21) Application number: **22885295.0**

(22) Date of filing: **11.08.2022**

(51) International Patent Classification (IPC):
***G06Q 10/00*** (2023.01)

(52) Cooperative Patent Classification (CPC):
Y02P 90/82; Y02P 90/84; Y02P 90/845;
Y02W 90/00

(86) International application number:
**PCT/CN2022/111808**

(87) International publication number:
**WO 2023/071395 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.10.2021 CN 202111267063**

(71) Applicants:
• **Guangdong Brunp Recycling Technology Co., Ltd.**
**Foshan, Guangdong 528137 (CN)**
• **Hunan Brunp Recycling Technology Co., Ltd.**
**Changsha, Hunan 410600 (CN)**
• **Hunan Brunp EV Recycling Co., Ltd.**
**Changsha, Hunan 410600 (CN)**

(72) Inventors:
• **LI, Aixia**
**Foshan, Guangdong 528137 (CN)**
• **YU, Haijun**
**Foshan, Guangdong 528137 (CN)**
• **WU, Benben**
**Foshan, Guangdong 528137 (CN)**
• **ZHANG, Congguang**
**Foshan, Guangdong 528137 (CN)**
• **XIE, Yinghao**
**Foshan, Guangdong 528137 (CN)**
• **LI, Changdong**
**Foshan, Guangdong 528137 (CN)**

(74) Representative: **Regimbeau**
**20, rue de Chazelles**
**75847 Paris Cedex 17 (FR)**

(54) **CARBON EMISSION ASSESSMENT SYSTEM FOR REUSE OF RETIRED BATTERIES**

(57) Disclosed is a carbon emission assessment system for recycling of decommissioned battery, comprising: an information module, an instruction module, an accounting module, and an analysis module, wherein the information module is configured to obtain operation stages of the recycling of decommissioned battery and an input inventory corresponding to each of the operation stages; the instruction module is configured to store a carbon dioxide emission calculation formula and carbon dioxide emission factors of different substances; the accounting module is configured to retrieve the carbon emission calculation formula and the carbon emission factors of different substances in the instruction module, in response to the operation stages and the input inventory in the information module inputted by a user, and to obtain carbon emission results for different operation stages; and the analysis module is configured to compare the carbon emission results obtained by the accounting module with a pre-stored standard carbon emission to obtain a comparison result. The system provides a scientific and standardized carbon emission evaluation for recycling process of decommissioned battery, and a comparison result is obtained by comparing the carbon emission result with a pre-stored standard carbon emission. The carbon emission of recycling of decommissioned battery can be optimized according to the comparison result.

EP 4 425 392 A1

Fig.1

## Description

## TECHNICAL FIELD

The invention relates to the technical field of recycling of decommissioned battery, in particular to a carbon emission assessment system for recycling of decommissioned battery.

## BACKGROUND

With the introduction of policies of carbon peaking in 2030 and carbon neutrality in 2060, the carbon emission requirements for industrial enterprises, especially new energy enterprises, are on the agenda. However, since calculation and assessment of carbon emissions are a series of complicated calculation processes, it is difficult for enterprises to conduct self-assessment based on actual conditions, and therefore they cannot conduct self-supervision and timely adjustment. Many non-compliant carbon emissions will continue to affect the environment in the future.

With the development of battery technology, batteries will play an increasingly important role in the future. Many batteries will be applied to various new energy companies or other industries. At the same time, a large number of batteries will be decommissioned according to their life cycles. Recycling batteries will also produce a complex carbon emission process, and carbon emissions are also very considerable due to the large number of batteries, which will inevitably affect the company's carbon emission indicators.

Therefore, it is necessary to conduct a standardized assessment of carbon emissions in the process of recycling decommissioned battery, so that enterprises can optimize carbon emissions in the process of recycling decommissioned battery based on the assessment.

## SUMMARY

The purpose of the present invention is to provide a carbon emission assessment system for recycling of decommissioned battery, to conduct a standardized assessment of carbon emissions during the recycling, so that enterprises can optimize carbon emissions during the recycling of decommissioned battery based on the assessment.

In order to achieve the above objective, the present invention provides a carbon emission assessment system for recycling of decommissioned battery, which includes an information module, an instruction module, an accounting module, and an analysis module.

The information module is configured to obtain operation stages of the recycling of decommissioned battery and an input inventory corresponding to each of the operation stages.

The instruction module is configured to store a carbon dioxide emission calculation formula and carbon dioxide emission factors of different substances.

The accounting module is configured to retrieve the carbon emission calculation formula and the carbon emission factors of different substances in the instruction module, in response to the operation stages and an input inventory in the information module inputted by a user, and to obtain carbon emission results of different operation stages.

The analysis module is configured to compare the carbon emission results obtained by the accounting module with a pre-stored standard carbon emission amount to obtain a comparison result.

Further, the carbon emission calculation formula is:

$$GWP_{\text{carbon emission}} = \sum_n Ei * Ci,$$

where, n represents different operation stages; $i$ represents a specific substance in the input inventory; $Ei$ represents a consumption or output of the specific substance $i$ in the input inventory; $Ci$ represents a carbon emission factor of the specific substance $i$ in the input inventory.

Further, the operation stages include one or more selected from a group consisting of pretreatment, leaching extraction, precursor preparation, and cathode material preparation.

Further, the input inventory includes one or more selected from a group consisting of raw materials, products, by-products, waste gas, waste residue, and energy involved in each operation stages.

Further, the information module includes a storage unit, where the storage unit is configured to store a standard carbon emission obtained according to a carbon emission policy promulgated by a state.

Further, the carbon emission system further includes a first optimization module, which is configured to rank carbon emissions of the operation stages according to the carbon emission results obtained by the analysis module, and to obtain an operation stage to be optimized according to a ranking result.

Further, the carbon emission system further includes a second optimization module, which is configured to perform a main contribution factor analysis according to the input inventory corresponding to the operation stage to be optimized, and to determine an optimization direction of the operation stage to be optimized.

Further, the carbon emission system further includes a display module, which is configured to display the comparison result obtained by the analysis module, the operation stage to be optimized determined by the first optimization module and the optimization direction determined by the second optimization module to the user.

Compared with the existing technology, the carbon emission assessment system for recycling of decommissioned battery in the embodiment of the present invention has the following beneficial effect: scientific and standardized carbon emission assessment can be carried out on the recycling of decommissioned battery, and the relevant company personnel can optimize the carbon emission of the recycling of decommissioned battery based on a comparison result obtained by comparing a carbon emission result with a pre-stored standard carbon emission.

## BRIEF DESCRIPTION OF DRAWINGS

Fig. 1 is a schematic diagram of a first overall structure of a carbon emission assessment system for recycling of decommissioned battery of the present invention;
Fig. 2 is a schematic diagram of an input inventory about operation stage of pre-treatment of the present invention;
Fig. 3 is a schematic diagram of an input inventory about operation stage of leaching and extraction of the present invention;
Fig. 4 is a schematic diagram of an input inventory about operation stage of precursor preparation operation stage of the present invention;
Fig. 5 is a schematic diagram of an input inventory about operation stage of synthesizing cathode material of the present invention;
Fig. 6 is a schematic diagram of a second overall structure of a carbon emission assessment system for recycling of decommissioned battery of the present invention

## DETAILED DESCRIPTION

The specific embodiments of the present invention will be described in further detail below in conjunction with the accompanying drawings and examples. The following examples are used to illustrate the present invention, but not to limit the scope of the present invention.

Example 1:

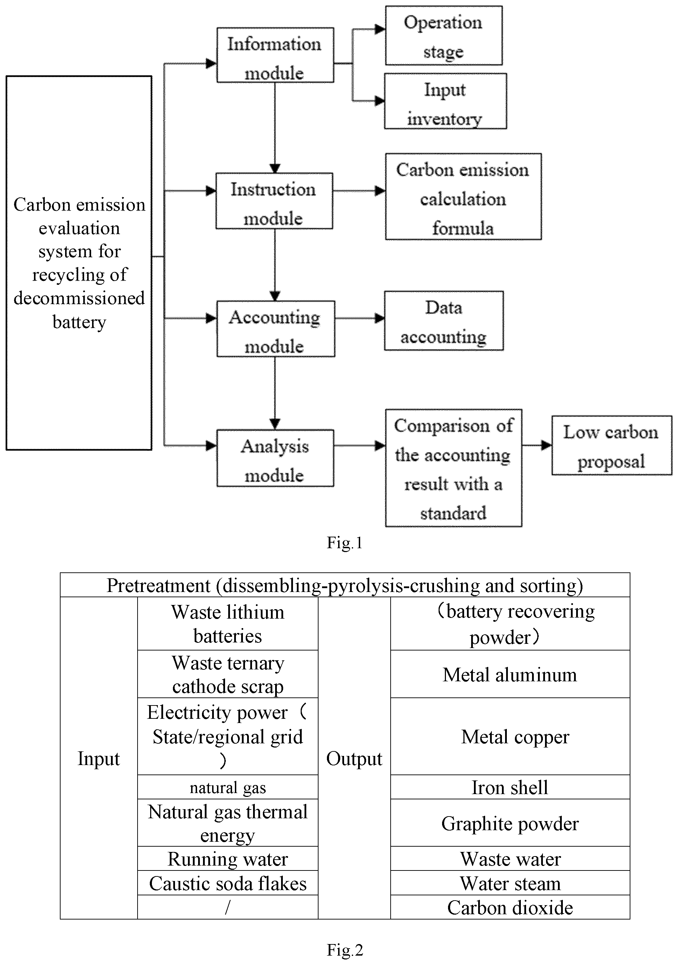

As shown in Fig. 1, the present invention discloses a carbon emission assessment system for recycling of decommissioned battery, which includes an information module, an instruction module, an accounting module, and an analysis module.
The information module is configured to obtain operation stages of the recycling of decommissioned battery and an input inventory corresponding to each of the operation stages.
The instruction module is configured to store a carbon dioxide emission calculation formula and carbon dioxide emission factors of different substances.
The accounting module is configured to retrieve the carbon emission calculation formula and the carbon emission factors of different substances in the instruction module, in response to the operation stages and an input inventory in the information module inputted by a user, and to obtain carbon emission results of different operation stages.
The analysis module is configured to compare the carbon emission results obtained by the accounting module with a pre-stored standard carbon emission to obtain a comparison result.
In this example, the carbon emission calculation formula is:

$$\mathrm{GWP}_{\text{carbon emission}} = \sum_n Ei * Ci,$$

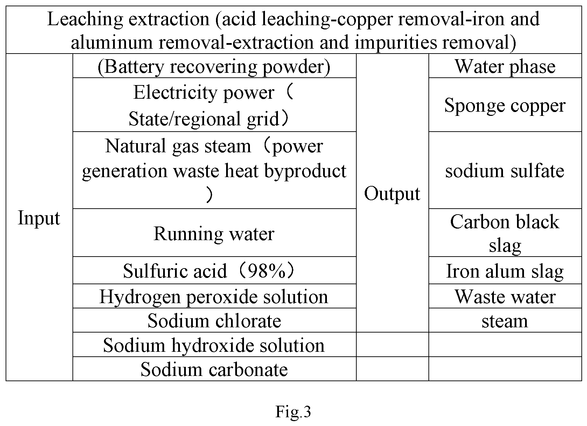

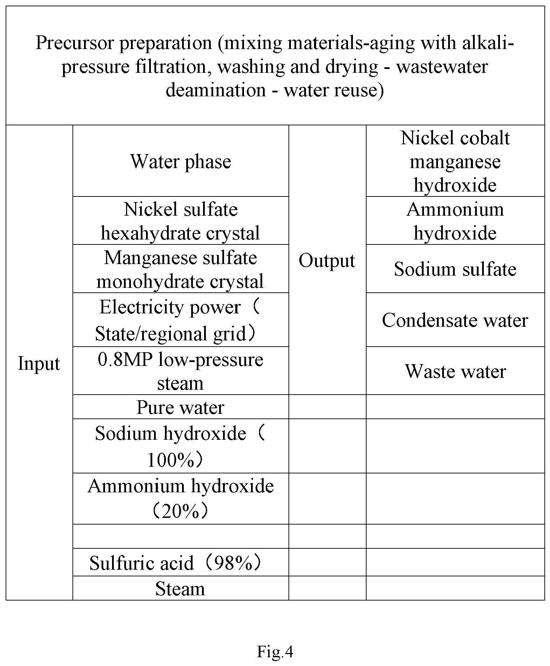

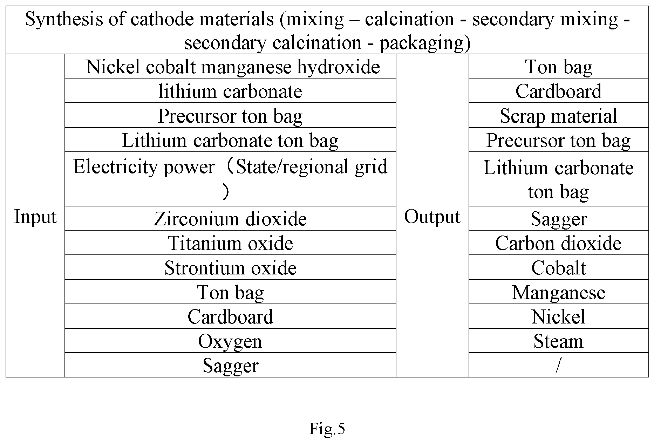

where n represents different operation stages; $i$ represents a specific substance in the input inventory; $Ei$ represents a consumption or output of the specific substance $i$ in the input inventory; $Ci$ represents a carbon emission factor of the specific substance $i$ in the input inventory.
In this example, the operation stages include one or more selected from a group consisting of pretreatment, leaching extraction, precursor preparation, and cathode material preparation.
In this example, the input inventory includes one or more selected from a group consisting of raw materials, products, by-products, waste gas, waste residue, and energy involved in each of the operation stages.
In this example, the input inventory includes, but is not limited to, the following inputs: decommissioned battery (waste lithium ion battery, waste battery, waste ternary positive scrap, etc.), electricity power, water, fuel (diesel, gasoline, liquefied petroleum gas, heavy fuel oil, light fuel oil, natural gas, propane, etc.); valuable metals (nickel, cobalt, manganese, lithium, iron, copper, aluminum, etc.), precursors, cathode materials, lye, acid, sodium carbonate, sodium hydroxide, sodium chlorate, manganese carbonate, sponge copper, sodium sulfate, graphite, waste residue (carbon black slag, iron alum slag, calcium slag, etc.), waste water, steam, extractant, etc.
In this example, the information module includes a storage unit, where the storage unit is configured to store a standard carbon emission according to a carbon emission policy promulgated by a state.
The carbon emission assessment system for recycling of decommissioned battery of the present invention is used to assess the carbon emission of preparing nickel cobalt manganese hydroxide and lithium nickel cobalt manganate cathode material by recycling waste lithium ion battery.
During the recycling, the operation stages carried out include: pretreatment (dissembling - pyrolysis - crushing), leaching extraction (acid leaching - copper removal-iron and aluminum removal - impurities removal of extraction), and precursors preparation (mixing materials - aging with alkali-pressure filtration, washing and drying - wastewater deamination - water reuse), synthesis of cathode materials (mixing - calcination - secondary mixing - secondary calcination - packaging). Th input inventories corresponding to each of the operation stages includes the examples of inventories in Figs. 2-5.

An accounting module is applied to select a carbon emission calculation formula and carbon emission factors of different substances to perform a carbon emission accounting, in response to the above-mentioned operation stages and input inventory inputted by a user.

After the accounting is completed, the carbon emissions of the different operation stages and the overall recycling process are displayed; the carbon emissions are compared with a pre-stored standard carbon emission, to obtain a comparison result.

In this example, the display mode of the comparison result includes, but is not limited to, a comparison table and a comparison chart.

Example 2:

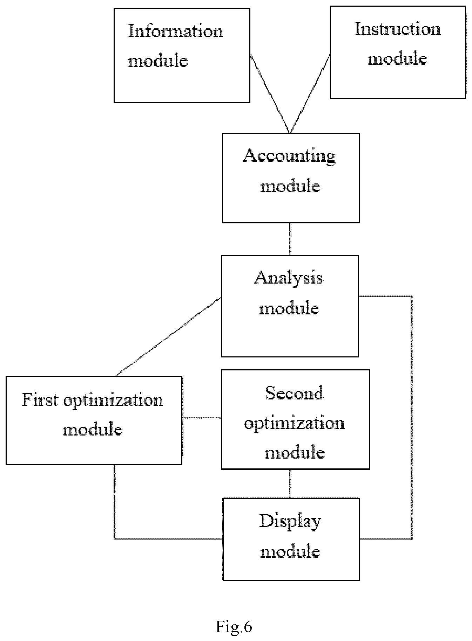

Referring to Fig. 6, on the basis of example 1, the carbon emission system further includes a first optimization module, which is configured to rank the carbon emissions of the operation stages according to the carbon emission results obtained by the analysis module, and to obtain an operation stage to be optimized according to a ranking result.

In this example, the ranking can be carried out based on a carbon emission, a ratio of the carbon emission to the total weight of the inventory, and so on.

Further, the carbon assessment emissions of the operation stages can be ranked by multiple sorting methods and each of the sorting methods is assigned a weight respectively. Then each of the ranking result obtained by the sorting methods is given a score, thereby a comprehensive score is obtained based on the score and a corresponding weight of the sorting methods. The operation stage with the highest comprehensive score is regarded as an operation stage to be optimized.

In this example, the carbon emission assessment system further includes a second optimization module, which is configured to perform a main contribution factor analysis according to an input inventory corresponding to the operation stage to be optimized, and to determine an optimization direction of the operation stage to be optimized.

In this example, the main contribution factor analysis can be carried out by methods such as SPSS statistical analysis method, logarithmic average weight decomposition method, partial least square method and other methods, which determines a contribution of different input inventories to carbon emissions. The input inventory having the largest contribution is an actual optimization direction of the operation stage to be optimized.

Further, according to the characteristics of the actual optimization direction, an optimization is carried out by strengthening technological innovation, implementing clean production, and choosing different optimized operations, such as using alternative low-carbon processes or raw materials, alternative clean energy/new energy/renewable energy, etc.

In this example, the carbon emission system further includes a display module, which is configured to display the comparison result obtained by the analysis module, the operation stage to be optimized determined by the first optimization module and the optimization direction determined by the second optimization module to the user.

In summary, the examples of the present invention provide a carbon emission assessment system for recycling of decommissioned battery, which has the following beneficial effects:

(1) A scientific and standardized carbon emission assessment can be carried out on the recycling of decommissioned battery, and a comparison result can be obtained by comparing the carbon emission results with a pre-stored standard carbon emission, so that a relevant company personnel can optimize the carbon emission during the recycling process of decommissioned battery according to the comparison results.

(2) By establishing a carbon emission assessment system for recycling of decommissioned battery, relevant companies only need to input production-related data and information, select a calculation instruction in the instruction module, and then the emission assessment system can quickly and easily obtain a carbon emission accounting data. A comparison of carbon emissions in different boundary ranges is presented through the analysis module, which can guide a research and development group to conduct energy-saving and emission-reduction low-carbon operation research for the processes with high carbon emissions, thereby gradually reducing carbon emissions, accelerating low-carbon transformation of enterprises, and contributing to achieve carbon peaking and carbon neutrality.

(3) The present invention has strong pertinence and high accuracy. It can quickly process the energy and greenhouse gas emission data of enterprises for recycling decommissioned battery, which is helpful for the work of the carbon management personnel of companies, reduces errors. It meets the need of a further low-carbon management, which in turn provides support for the industry's energy and carbon emission planning.

The above are only the preferred embodiments of the present invention. It should be noted that for those of ordinary skill in the art, without departing from the technical principles of the present invention, several improvements and substitutions can be made. These improvements and substitutions should also be regarded as being within the protection scope of the present invention.

**Claims**

1. A carbon emission assessment system for recycling of decommissioned battery, comprising an information module, an instruction module, an accounting module, and an analysis module,

   wherein the information module is configured to obtain operation stages of the recycling of decommissioned battery and an input inventory corresponding to each of the operation stages; the instruction module is configured to store a carbon dioxide emission calculation formula and carbon dioxide emission factors of different substances;
   the accounting module is configured to retrieve the carbon emission calculation formula and the carbon emission factors of different substances in the instruction module, in response to the operation stages and the input inventory in the information module inputted by a user, and to obtain carbon emission results for different operation stages; and
   the analysis module is configured to compare the carbon emission results obtained by the accounting module with a pre-stored standard carbon emission to obtain a comparison result.

2. The carbon emission assessment system for recycling of decommissioned battery according to claim 1, wherein the carbon emission calculation formula is:

$$\mathrm{GWP}_{\text{carbon emission}} = \sum_n Ei * Ci,$$

   wherein n is different operation stages; $i$ is a specific substance in the input inventory; $Ei$ is a consumption or output of the specific substance $i$ in the input inventory; and $Ci$ is the carbon emission factor of the specific substance $i$ in the input inventory.

3. The carbon emission assessment system for recycling of decommissioned battery according to claim 1, wherein the operation stages comprise one or more selected from a group consisting of pretreatment, leaching and extraction, precursor preparation, and cathode material preparation.

4. The carbon emission assessment system for recycling of decommissioned battery according to claim 1, wherein the input inventory comprises one or more selected from a group consisting of raw materials, products, by-products, exhaust gas, waste residue, and energy involved in each of the operation stages.

5. The carbon emission assessment system for recycling of decommissioned battery according to claim 1, wherein the information module comprises a storage unit, and the storage unit is configured to store a standard carbon emission obtained according to a carbon emission policy promulgated by a state.

6. The carbon emission assessment system for recycling of decommissioned battery according to claim 1, further comprising a first optimization module, wherein the first optimization module is configured to rank carbon emissions of the operation stages according to the carbon emission results obtained by the analysis module, and to obtain an operation stage to be optimized according to a ranking result.

7. The carbon emission assessment system for recycling of decommissioned battery according to claim 6, further comprising a second optimization module, wherein the second optimization module is configured to perform a main contribution factor analysis according to the input inventory corresponding to the operation stage to be optimized, and to determine an optimization direction for the operation stage to be optimized.

8. The carbon emission assessment system for recycling of decommissioned battery according to claim 7, further comprising a display module, wherein the display module is configured to display the comparison result obtained by the analysis module, the operation stage to be optimized determined by the first optimization module and the optimization direction determined by the second optimization module to the user.

Fig.1

| Pretreatment (dissembling-pyrolysis-crushing and sorting) | | | |
|---|---|---|---|
| Input | Waste lithium batteries | Output | （battery recovering powder） |
| | Waste ternary cathode scrap | | Metal aluminum |
| | Electricity power （State/regional grid） | | Metal copper |
| | natural gas | | Iron shell |
| | Natural gas thermal energy | | Graphite powder |
| | Running water | | Waste water |
| | Caustic soda flakes | | Water steam |
| | / | | Carbon dioxide |

Fig.2

| Leaching extraction (acid leaching-copper removal-iron and aluminum removal-extraction and impurities removal) | | | |
|---|---|---|---|
| Input | (Battery recovering powder) | Output | Water phase |
| | Electricity power （State/regional grid） | | Sponge copper |
| | Natural gas steam （power generation waste heat byproduct） | | sodium sulfate |
| | Running water | | Carbon black slag |
| | Sulfuric acid （98%） | | Iron alum slag |
| | Hydrogen peroxide solution | | Waste water |
| | Sodium chlorate | | steam |
| | Sodium hydroxide solution | | |
| | Sodium carbonate | | |

Fig.3

| Precursor preparation (mixing materials-aging with alkali-pressure filtration, washing and drying - wastewater deamination - water reuse) | | | |
|---|---|---|---|
| Input | Water phase | Output | Nickel cobalt manganese hydroxide |
| | Nickel sulfate hexahydrate crystal | | Ammonium hydroxide |
| | Manganese sulfate monohydrate crystal | | Sodium sulfate |
| | Electricity power（State/regional grid） | | Condensate water |
| | 0.8MP low-pressure steam | | Waste water |
| | Pure water | | |
| | Sodium hydroxide（100%） | | |
| | Ammonium hydroxide（20%） | | |
| | | | |
| | Sulfuric acid（98%） | | |
| | Steam | | |

Fig.4

| Synthesis of cathode materials (mixing – calcination - secondary mixing - secondary calcination - packaging) | | | |
|---|---|---|---|
| Input | Nickel cobalt manganese hydroxide | Output | Ton bag |
| | lithium carbonate | | Cardboard |
| | Precursor ton bag | | Scrap material |
| | Lithium carbonate ton bag | | Precursor ton bag |
| | Electricity power（State/regional grid） | | Lithium carbonate ton bag |
| | Zirconium dioxide | | Sagger |
| | Titanium oxide | | Carbon dioxide |
| | Strontium oxide | | Cobalt |
| | Ton bag | | Manganese |
| | Cardboard | | Nickel |
| | Oxygen | | Steam |
| | Sagger | | / |

Fig.5

Fig.6

## INTERNATIONAL SEARCH REPORT

| International application No. |
|---|
| **PCT/CN2022/111808** |

### A. CLASSIFICATION OF SUBJECT MATTER

G06Q 10/00(2012.01)i

According to International Patent Classification (IPC) or to both national classification and IPC

### B. FIELDS SEARCHED

Minimum documentation searched (classification system followed by classification symbols)

G06Q;G06F

Documentation searched other than minimum documentation to the extent that such documents are included in the fields searched

Electronic data base consulted during the international search (name of data base and, where practicable, search terms used)

CNABS; WPABS; DWPI; CNTXT; ENTXT; ENTXTC; CNKI: 退役, 作废, 电池, 回收, 再利用, 工艺, 原料, 产品, 能源, 碳排放, 标准, 分析, 对比, 优化, 改进, retire, release, cancel, obsolete, cell, battery, recycle, reuse, technology, process, craft, raw, material, product, energy, source, carbon, emission, standard, measure, analyze, compare, optimize, improve, modify

### C. DOCUMENTS CONSIDERED TO BE RELEVANT

| Category* | Citation of document, with indication, where appropriate, of the relevant passages | Relevant to claim No. |
|---|---|---|
| PX | CN 114004376 A (GUANGDONG BRUNP RECYCLING TECHNOLOGY CO., LTD. et al.) 01 February 2022 (2022-02-01) claims 1-8 | 1-8 |
| X | CN 113240275 A (ZHEJIANG ZHONGLAN ENVIRONMENTAL TECHNOLOGY CO., LTD.) 10 August 2021 (2021-08-10) description, paragraphs [0023]-[0030] | 1-8 |
| A | CN 105320638 A (ZHONGSHAN TORCH POLYTECHNIC) 10 February 2016 (2016-02-10) entire document | 1-8 |
| A | FR 3094121 A1 (BOISNARD, L.) 25 September 2020 (2020-09-25) entire document | 1-8 |
| A | KR 101184982 B1 (INDUSTRY-UNIVERSITY COOPERATION FOUNDATION SOGANG UNIVERSITY) 02 October 2012 (2012-10-02) entire document | 1-8 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 October 2022** | **21 October 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/111808**

| Patent document cited in search report | | | Publication date (day/month/year) | Patent family member(s) | Publication date (day/month/year) |
|---|---|---|---|---|---|
| CN | 114004376 | A | 01 February 2022 | None | |
| CN | 113240275 | A | 10 August 2021 | None | |
| CN | 105320638 | A | 10 February 2016 | None | |
| FR | 3094121 | A1 | 25 September 2020 | None | |
| KR | 101184982 | B1 | 02 October 2012 | None | |

Form PCT/ISA/210 (patent family annex) (January 2015)